# EUROPÄISCHE PATENTSCHRIFT

(11) **EP 4 529 087 B1**
(45) Veröffentlichungstag und Bekanntmachung des Hinweises auf die Patenterteilung: **17.06.2026**
(21) Anmeldenummer: 23198872.6
(22) Anmeldetag: 21.09.2023
(51) Int. Cl.: H04L 9/40, G06F 16/901, G06F 12/02

(54) **VERFAHREN ZUM AUSFALLSICHEREN SPEICHERN UND PUFFERN VON SEQUENZNUMMERN IN EINEM NETZWERK**
METHOD FOR FAIL-SAFE STORING AND BUFFERING SEQUENCE NUMBERS IN A NETWORK
PROCÉDÉ DE STOCKAGE ET DE MISE EN MÉMOIRE TAMPON À SÉCURITÉ INTÉGRÉE DE NUMÉROS DE SÉQUENCE DANS UN RÉSEAU

(43) Veröffentlichungstag der Anmeldung: 26.03.2025
(73) Patentinhaber: ise Individuelle Software und Elektronik GmbH, 26122 Oldenburg (DE)
(72) Erfinder: Südkamp, Henning, 26127 Oldenburg (DE)
(74) Vertreter: Angerhausen, Christoph

(56) Entgegenhaltungen:
- US-A1- 2007 083 923
- US-A1- 2015 142 759

## Beschreibung

### TECHNISCHES GEBIET

Die hier offenbarte Erfindung liegt auf dem technischen Gebiet der Absicherung eines Computernetzwerks gegen bestimmte Angriffe auf das Netzwerk.

### HINTERGRUND

Geräte, die über Netzwerke miteinander gekoppelt sind, können mittels Nachrichten miteinander kommunizieren. Nachrichten können verschlüsselt werden, um das Mitlesen oder Modifizieren der Nachrichten durch Dritte zu erschweren; beispielsweise können Absender und Empfänger einer Nachricht über symmetrische Schlüssel verfügen, um die Nachricht zu verschlüsseln beziehungsweise zu entschlüsseln.

Zusätzlich zum Verschlüsseln von Nachrichten können diese durch Sequenznummern abgesichert werden. Eine Sequenznummer ist in der Regel eine ganze Zahl oder natürliche Zahl, die einer Nachricht vor deren Versenden durch den Absender hinzugefügt wird. Die Sequenznummer wird auf beiden Seiten - Absender und Empfänger - gespeichert. Der Absender inkrementiert die Sequenznummer, wenn er eine neue Nachricht an den Empfänger sendet, fügt der Nachricht die neue Sequenznummer hinzu und speichert diese. Der Empfänger prüft bei Erhalt der Nachricht, ob die Sequenznummer größer ist als eine zuletzt dort empfangene Sequenznummer, und kann auf diese Weise sicherstellen, dass die Nachricht zumindest mit hoher Wahrscheinlichkeit nicht von dritter Seite modifiziert oder gesendet wurde.

Die Sequenznummern sollten auf Empfängerseite schnell gespeichert werden und schnell zugreifbar sein, um die Prüfung einer Sequenznummer möglichst ohne Verzögerung durchzuführen. Außerdem sollten die Sequenznummern in nichtflüchtigem Speicher abgelegt werden, um einen Verlust der Sequenznummern bei einem Ausfall des Geräts vorzubeugen.

Das US 2015/142759 A1 offenbart ein Verfahren zum Detektieren, ob ein Paket von einer Vielzahl von Paketen, die durch mindestens eine Übertragungsstation über ein Netzwerk übertragen werden, wiedergegeben worden ist. Jedes Paket enthält eine Nachricht und eine Kennung, wobei die Pakete nacheinander über mehrere aufeinanderfolgende Zeitperioden übertragen werden. Das Verfahren umfasst das Empfangen des Pakets durch mindestens eine Empfangsstation und das Lesen der Kennung des empfangenen Pakets, um eine empfangene Kennung zu erhalten, und das Konsultieren einer Datenbank von bereits empfangenen Kennungen durch die Empfangsstation, um zu bestimmen, ob die empfangene Kennung bereits empfangen wurde. Wenn die empfangene Kennung nicht bereits empfangen wurde, beinhaltet das Verfahren auch das Aktualisieren der Datenbank, um die empfangene Kennung aufzunehmen. Der Identifizierer enthält einen Indikator, dass er zu Gruppen von Paketen gehört.

Das US 2007/083923 A1 offenbart einen Mechanismus zum Bereitstellen eines starken Anti-Replay-Schutzes an einem Sicherheits-Gateway in einem Netzwerk zum Schutz gegen einen Angreifer, der verschlüsselte Pakete dupliziert. Der Mechanismus weist jedem verschlüsselten Paket eine eindeutige Sequenznummer und einen Zeitstempel zu. Ein empfangendes Sicherheits-Gateway weist Pakete zurück, die eine duplikative Sequenznummer aufweisen oder die zu alt sind, um sich selbst vor Replay-Angriffen zu schützen. Jedes Sicherheits-Gateway prüft die Sequenznummern, wenn sie empfangen werden, indem es weiß, dass das sendende Sicherheits-Gateway Sequenznummern in einer zunehmenden Reihenfolge zuweist. Das empfangende Sicherheits-Gateway merkt sich an den Wert der höchsten Sequenznummer, die es bereits gesehen hat, sowie an bis zu N zusätzliche Sequenznummern. Jedes Paket mit einer doppelten Sequenznummer wird verworfen. Zusätzlich zu der Sequenznummer hat jedes Paket auch einen assoziierten Zeitstempel, der einer Epoche entspricht, während der es empfangen werden sollte. Wenn das Paket empfangen wird, nachdem die Epoche abgelaufen ist, wird das Paket zurückgewiesen.

### ZUSAMMENFASSUNG

Ausführungsformen der Erfindung betreffen ein computerimplementiertes Verfahren zur Verwaltung von Sequenznummern in einem Netzwerk, umfassend: Empfangen, durch ein erstes Gerät in dem Netzwerk, einer Nachricht eines zweiten Geräts in dem Netzwerk, wobei das erste Gerät eine erste Tabelle in einem nichtflüchtigen Speicher und eine zweite Tabelle in einem flüchtigen Speicher unterhält; Prüfen, durch das erste Gerät, ob für das zweite Gerät ein Eintrag in der zweiten Tabelle vorliegt; falls für das zweite Gerät ein Eintrag vorliegt, Verschieben aller Einträge der zweiten Tabelle vor diesem Eintrag um eine Position nach hinten, und Verschieben des Eintrags an den Beginn der zweiten Tabelle; falls für das zweite Gerät kein Eintrag in der zweiten Tabelle vorliegt, Prüfen, ob für das zweite Gerät ein Eintrag in der ersten Tabelle vorliegt, und, falls ein Eintrag in der ersten Tabelle vorliegt, Einfügen des Eintrags der ersten Tabelle zu Beginn der zweiten Tabelle, und Verschieben aller anderen Einträge der zweiten Tabelle um eine Position nach hinten; Vergleichen, durch das erste Gerät, der Sequenznummer der Nachricht mit einer Sequenznummer in dem ersten Eintrag der zweiten Tabelle; und falls die Sequenznummer in dem ersten Eintrag kleiner ist als die Sequenznummer der Nachricht, Aktualisieren der Sequenznummer in dem ersten Eintrag der zweiten Tabelle und in einem Eintrag des zweiten Geräts in einem wear-leveled Speicher.

Das computerimplementierte Verfahren kann auf einem oder mehreren der beteiligten Geräte eines Netzwerks laufen, insbesondere auf dem hier aufgeführten ersten Gerät, das Nachrichten empfängt und verarbeitet. Das Verfahren kann in Form eines ausführbaren Codes kodiert sein und als Prozess auf einem Prozessor des Geräts ablaufen. Das Verfahren kann parallel auf mehreren Geräten unabhängig von anderen Geräten ablaufen und für das jeweilige Gerät die Sequenznummern verwalten.

Die erste Tabelle des ersten Geräts umfasst Einträge, die jedem Gerät oder auch einer Teilmenge der Geräte im Netzwerk eine jeweilige zuletzt verwendete oder jedenfalls eine aktuelle Sequenznummer zuordnen. Es handelt sich um diejenigen Sequenznummern, die für das jeweilige Gerät in seiner Funktion als Absender aktuell sind. Das hier als erstes Gerät bezeichnete Gerät ist in einer Ausführungsform nicht Bestandteil dieser Tabelle, da das erste Gerät in dieser Darstellung des Verfahrens lediglich als Empfänger einer Nachricht dient. Alternativ kann das erste Gerät jedoch ebenfalls einen Eintrag in der ersten Tabelle erhalten und diesen verwenden, um beim Versenden einer Nachricht die eigene Sequenznummer einzusehen, zu inkrementieren und in einer Nachricht zu verwenden. Dieses Inkrementieren kann unabhängig davon erfolgen, ob das Gerät nacheinander an das gleiche Empfängergerät oder an unterschiedliche Empfängergeräte sendet.

Die erste Tabelle wird grundsätzlich nicht durch das erste Gerät aktualisiert. Die erste Tabelle kann von einem Installateur oder Administrator des Netzwerks einmalig oder bei einer Änderung der Topologie des Netzwerks neu erstellt und an die Geräte des Netzwerks übermittelt oder dort konfiguriert werden. In einer Ausführungsform unterscheidet sich die erste Tabelle von Gerät zu Gerät und enthält bei N Geräten im Netzwerk jeweils N-1 Einträge oder auch N Einträge; der letztere Fall greift, wenn die erste Tabelle auch die Sequenznummer des betreffenden Geräts enthält, auf dem das Verfahren ausgeführt wird. In diesem Fall kann die Tabelle in allen Geräten identisch sein und somit für jedes Gerät auch die eigene zum Versenden zuletzt verwendete oder aktuelle Sequenznummer enthalten. Die erste Tabelle wird vorzugsweise in einem nichtflüchtigen Speicher eines betreffenden Geräts abgelegt.

Die zweite Tabelle ist zunächst - also nach Zuweisung der ersten Tabellen an die Geräte durch einen Installateur oder Administrator - leer. Bei Erhalt einer neuen ersten Tabelle durch einen Installateur oder Administrator, beispielsweise aufgrund einer geänderten Topologie des Netzwerks, kann die zweite Tabelle durch das jeweilige Gerät gelöscht werden, da die erste Tabelle in diesem Fall als einzige sämtliche aktuellen Sequenznummern enthält. Die zweite Tabelle liegt in einem flüchtigen Speicher und wird bei Anwendung des hier beschriebenen Verfahrens nach und nach um aktuelle Sequenznummern der Geräte ergänzt, nämlich jedes Mal, wenn das Gerät, auf dem das Verfahren ausgeführt wird, eine neue Nachricht von einem dieser Geräte erhält. Mit einem Eintreffen neuer Nachrichten läuft das Verfahren zunehmend schneller ab, da die zweite Tabelle immer vor der ersten Tabelle geprüft wird, und da die Wahrscheinlichkeit, einen Eintrag für einen Absender bereits in der zweiten Tabelle zu finden, immer höher wird. Da die zweite Tabelle in einem flüchtigen Speicher liegt, sind Zugriffe auf diese schneller als auf die erste Tabelle, die nichtflüchtig gespeichert ist.

Für den Fall, dass ein Gerät einem plötzlichen Spannungsabfall unterliegt, kann die zweite Tabelle verloren gehen, da der betreffende Speicher ein flüchtiger Speicher ist. Um die zweite Tabelle in diesem Fall rekonstruieren zu können, wird parallel zum Aktualisieren einer Sequenznummer in der zweiten Tabelle ein entsprechender Eintrag in einen wear-leveled Speicher geschrieben.

Das Verschieben aller bisherigen Einträge in der zweiten Tabelle nach hinten, wenn ein neuer Eintrag in diese Tabelle geschrieben wird, ermöglicht ein schnelleres Auffinden von Einträgen beim Prüfen, ob für ein Absendergerät ein Eintrag in dieser Tabelle vorliegt. Die Maßnahme des Verschiebens beruht auf der Einsicht, dass ein Gerät zwar von unterschiedlichen, theoretisch auch von allen, anderen Geräten Nachrichten empfängt; jedoch stammen in der Praxis die meisten Nachrichten von wenigen Geräten. Indem aufgefundene oder hinzugefügte Einträge in der zweiten Tabelle an den Beginn dieser Tabelle gestellt werden, können diese schneller aufgefunden werden, wenn das gleiche sendende Gerät eine neue Nachricht versendet. Diese Wirkung wird noch dadurch verstärkt, dass die zweite Tabelle in einem flüchtigen Speicher abgelegt ist.

In einer Ausführungsform umfasst das Verfahren Verarbeiten der Nachricht, falls die Sequenznummer in dem ersten Eintrag der zweiten Tabelle kleiner ist als die Sequenznummer der Nachricht.

Das Verarbeiten der Nachricht umfasst gegebenenfalls Entschlüsseln der Nachricht mit einem symmetrischen Schlüssel, den die Geräte vorab untereinander austauschen. Anschließend wird der Inhalt der Nachricht an eine Anwendung auf dem Gerät weitergeleitet, beispielsweise einer Emailanwendung, einem Browser oder einem Prozess, der auf dem Gerät abläuft und anderweitige Funktionen für das Gerät ausführt.

Die Verarbeitung der Nachricht erfolgt unter der Bedingung, dass die Sequenznummer der Nachricht kleiner ist als eine zuletzt gespeicherte Sequenznummer, die dem Gerät zugeordnet ist, das die Nachricht versendete. Ist die Sequenznummer größer oder gleich der zuletzt gespeicherten Sequenznummer, wird die Nachricht nicht weiterverarbeitet, sondern wird ignoriert oder an einen Administrator oder Anwender berichtet.

In einer Ausführungsform enthält jeder Eintrag der zweiten Tabelle eine Speicheradresse oder einen Index eines Eintrags für das gleiche sendende Gerät in der ersten Tabelle und/oder eine Speicheradresse eines Eintrags für das gleiche sendende Gerät in dem wear-leveled Speicher.

Das Speichern von Indizes oder Adressen einer Tabelle in einer anderen Tabelle dient dem schnelleren Auffinden in der anderen Tabelle. Ist eine in der zweiten Tabelle gespeicherte Sequenznummer kleiner als eine empfangene Sequenznummer, aktualisiert das Verfahren, wie bereits erläutert, den Eintrag des zweiten Geräts (sendendes Gerät) in dem wear-leveled Speicher; darüber hinaus invalidiert das Verfahren in einer Ausführungsform einen eventuell vorhandenen bisherigen Eintrag des zweiten Geräts im wear-leveled Speicher. Enthält die zweite Tabelle in dem Eintrag bereits eine Adresse für einen solchen bisherigen Eintrag, kann dieser anhand der Adresse in dem wear-leveled Speicher unmittelbar invalidiert werden, ohne erst nach dem Eintrag suchen zu müssen. In dieser Ausführungsform wird die Adresse eines Eintrags oder einer Sequenznummer nach deren Aktualisieren in dem wear-leveled Speicher in der zweiten Tabelle vermerkt, um die Adresse in dem wear-leveled Speicher später invalidieren zu können.

In einer Ausführungsform umfasst das Verschieben aller anderen Einträge der zweiten Tabelle: Prüfen, ob die Anzahl der Einträge die Anzahl der Speicherplätze in der zweiten Tabelle übersteigt, und falls die Anzahl der Einträge die Anzahl der Speicherplätze übersteigt, Ermitteln eines Eintrags in der ersten Tabelle, wobei der Eintrag in der ersten Tabelle das gleiche Gerät umfasst wie der überzählige Eintrag der zweiten Tabelle, und Aktualisieren des Eintrags in der ersten Tabelle. Die Adresse der Sequenznummer in der zweiten Tabelle kann in diesem Fall verwendet werden, um besonders schnell auf den entsprechenden Eintrag in der ersten Tabelle zuzugreifen.

Diese Ausführungsform dient dem Zweck, das Verfahren auch dann ausführen zu können, wenn der zweiten Tabelle weniger Speicherplatz als erforderlich zugewiesen wurde. Im Regelfall ist die zweite Tabelle maximal genau so groß wie die erste und enthält somit für jedes Gerät genau einen Eintrag. Ist die zweite Tabelle jedoch kleiner als die erste, etwa weil nicht genügend Speicherplatz zur Verfügung steht oder nicht von allen Geräten der ersten Tabelle Nachrichten erwartet werden, so kann in dieser Ausführungsform ein Eintrag der zweiten Tabelle gelöscht und ausnahmsweise eine Anpassung der ersten Tabelle anhand dieses Eintrags vorgenommen werden. Die Prüfung, ob die zweite Tabelle noch über genügend Speicherplatz verfügt, wird vorgenommen, wenn eine neue Sequenznummer gespeichert werden soll, die bislang nicht in der zweiten Tabelle enthalten war. In diesem Fall muss ein neuer Eintrag für die zweite Tabelle erstellt werden. Stellt sich heraus, dass für einen neuen Eintrag in der zweiten Tabelle kein Speicherplatz zur Verfügung steht, wird der älteste Eintrag in der zweiten Tabelle, also der letzte Eintrag, durch Verschieben aller andere Einträge aus der zweiten Tabelle entfernt und sein Inhalt verwendet, um den entsprechenden Eintrag in der ersten Tabelle zu aktualisieren.

In einer Ausführungsform umfasst das Prüfen, ob die Anzahl der Einträge die Anzahl der Speicherplätze in der zweiten Tabelle übersteigt: Zählen der Einträge der zweiten Tabelle, bis ein Eintrag erreicht ist, der einen vorbestimmten Bezeichner enthält, und Vergleichen der Zahl mit einer vorgesehenen maximalen Größe der Tabelle.

Das Speichern von Daten in einer Tabelle, also etwa in einem Array, ist besonders effizient, da Datenstrukturen mit dynamisch veränderlicher Größe, etwa verkettete Listen, größeren Aufwand erfordern; dies betrifft insbesondere den Aufwand zum Auffinden eines Elements in einer Datenstruktur. Gemäß den hier offenbarten Ausführungsformen werden Tabellen lückenlos bis zu einem letzten Eintrag beschrieben; die Tabelle enthält also keine leeren Einträge oder ungenutzten Speicherplatz vor dem letzten Eintrag. Um das Ende einer Tabelle zu erkennen, enthält die Tabelle hinter dem letzten Eintrag einen speziellen Bezeichner, der in den Einträgen nicht vorkommt und mit dessen Hilfe das Ende der Tabelle erkannt werden kann. Die Stellung des Bezeichners in der Tabelle kann mit einer maximalen Größe der Tabelle, also der maximal möglichen Anzahl von Einträgen, verglichen werden, um zu ermitteln, ob die Tabelle bereits ihre maximale Größe erreicht hat.

In einer Ausführungsform ist der nichtflüchtige Speicher ein nichtflüchtiger Flashspeicher, und das Aktualisieren des Eintrags in der ersten Tabelle umfasst: Auslesen eines Sektors des nichtflüchtigen Speichers, der den Eintrag enthält, und Löschen des Sektors; Ersetzen des Eintrags in dem ausgelesenen Sektor durch den überzähligen Eintrag der zweiten Tabelle; und Schreiben des ausgelesenen Sektors in den gelöschten Sektor.

Flashspeicher sind verbreitete Speicherformen mit der Besonderheit, dass Sektoren dieses Speichers, die bereits beschrieben wurden und erneut beschrieben werden sollen, vor dem erneuten Beschreiben erst gelöscht werden müssen. Zudem unterliegen Flashspeicher einer Abnutzung (wear): Sektoren können nicht unbegrenzt gelöscht und beschrieben werden. Zugriffe auf Flashspeicher werden daher mit wear-leveling-Verfahren implementiert, die die Lebensdauer der Speicher aufrechterhalten. In den hier offenbarten Ausführungsformen finden Flashspeicher Verwendung als dauerhafte nichtflüchtige Speichermedien. Die Verwendung eines Flashspeichers für die erste Tabelle kommt den Eigenschaften des Flashspeichers entgegen, da die erste Tabelle lediglich in seltenen Fällen, nämlich bei einem Überlauf der zweiten Tabelle, beschrieben wird.

In einer Ausführungsform umfasst das Prüfen, ob für das zweite Gerät ein Eintrag in der zweiten Tabelle vorliegt: Auslesen einer Geräteadresse aus der Nachricht; und Vergleichen jedes Eintrags in der zweiten Tabelle, bis ein Eintrag gefunden wurde, der die Geräteadresse enthält.

Das genannte Vorgehen ermöglicht ein besonders schnelles Auffinden eines Eintrags in der zweiten Tabelle: Die Einträge der zweiten Tabelle enthalten Geräteadressen und zugehörige Sequenznummern. Die Einträge sind aufgrund der oben erläuterten Verschiebungen geordnet nach der Reihenfolge, in der sie geschrieben wurden, wobei der erste Eintrag der zweiten Tabelle zuletzt geschrieben wurde und der letzte Eintrag der älteste ist. Bei Eintreffen einer Nachricht, die von einem Gerät stammt, das erst kürzlich eine Nachricht an das empfangende Gerät sendete, wird der zugehörige Eintrag in der zweiten Tabelle in aller Regel innerhalb von wenigen Vergleichsoperationen gefunden. Eine Geschwindigkeitsvorteil ist zudem dadurch gegeben, dass die zweite Tabelle in einem flüchtigen Speicher liegt.

In einer Ausführungsform sind Einträge in der ersten Tabelle nach Geräteadressen sortiert, und das Prüfen, ob für das zweite Gerät ein Eintrag in der ersten Tabelle vorliegt, umfasst, eine binäre Suche auf den Einträgen der ersten Tabelle anhand deren Geräteadressen durchzuführen.

Die Geräteadressen können in Form von IP-Adressen oder als Bezeichner der Geräte vorliegen; jedoch wird eine einheitliche Adressierung gewählt, wenn die erste Tabelle nach Geräteadressen geordnet ist. Unabhängig von der gewählten Adressierung können die Einträge lexikografisch anhand ihrer Adressen oder Bezeichner geordnet werden. Durch die Verwendung einer binären Suche kann ein betreffender Eintrag besonders schnell identifiziert werden. Diese Suche eignet sich auch, um schnell festzustellen, dass für eine bestimmte Geräteadresse überhaupt kein Eintrag in der ersten Tabelle vorliegt.

In einer Ausführungsform wird die Nachricht nicht weiterverarbeitet, wenn beim Prüfen, ob für das zweite Gerät ein Eintrag in der ersten Tabelle vorliegt, in der ersten Tabelle kein Eintrag gefunden wurde.

Wird in der ersten Tabelle für eine Geräteadresse kein Eintrag gefunden, stammt die Nachricht offenbar von einem Gerät, dass in dem Netzwerk unbekannt ist oder für das keine Nachrichten an dem ersten Gerät erwartet wurden oder das irrtümlich nicht Bestandteil der ersten Tabelle war. Aus Sicherheitsgründen wird diese Nachricht nicht weiterverarbeitet, da eine unbekannte Geräteadresse nicht vertrauenswürdig ist.

In einer Ausführungsform wird die Nachricht nicht weiterverarbeitet, wenn die Sequenznummer in dem ersten Eintrag der zweiten Tabelle größer oder gleich der Sequenznummer der Nachricht ist.

Auch in diesem Beispiel kann das Nichtweiterverarbeiten einer Nachricht bedeuten, dass eine Nachricht an einen Administrator ausgegeben wird. Eine Sequenznummer, die kleiner ist als eine zuletzt empfangene Sequenznummer des gleichen Absenders, ist ein Zeichen dafür, dass ein Angriff eines Dritten oder eine anderweitige Störung vorliegt.

In einer Ausführungsform enthält der wear-leveled Speicher vorab gelöschte Sektoren, und das Aktualisieren der Sequenznummer in einem Eintrag des zweiten Geräts in dem wear-leveled Speicher umfasst: Auswählen einer unbeschriebenen Stelle in einem zuvor gelöschten Sektor, und Schreiben eines Eintrags mit der Sequenznummer in den ausgewählten Sektor.

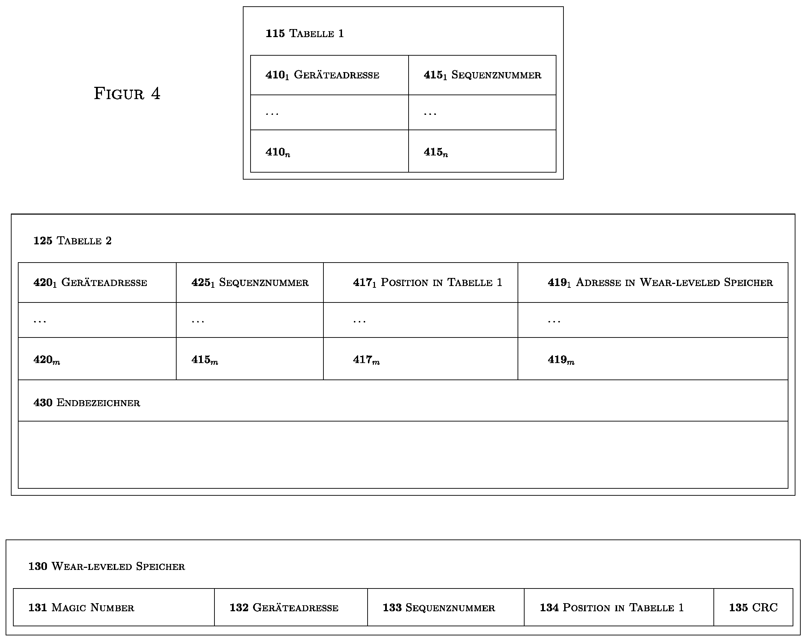

Wird eine neue erste Tabelle bereitgestellt, etwa weil sich die Adressen im Netzwerk geändert haben, werden alle in der zweiten Tabelle referenzierten Einträge im wear-leveled Speicher invalidiert und anschließend die zweite Tabelle geleert. Beim Schreiben einer Geräteadresse und Sequenznummer in dem wear-leveled Speicher prüft das Verfahren, ob diese Adresse bereits gespeichert wurde. Jedoch werden aufgefundene Adressen nicht etwa mit der neuen Sequenznummer aktualisiert, sondern stattdessen invalidiert, also als ungültig markiert. Für die Geräteadresse und ihre Sequenznummer wird geprüft, ob in einem der bisher beschriebenen Sektoren noch ausreichend Speicherplatz für Geräteadresse und Sequenznummer vorhanden ist; in diesem Fall werden beide an diesen Speicherplatz geschrieben. Andernfalls wird die nächste freie Stelle im wear-leveled Speicher ausgewählt und mit Geräteadresse und Sequenznummer beschrieben. Durch dieses Vorgehen werden Schreibvorgänge auf dem wear-leveled Speicher erheblich beschleunigt. Der wear-leveled Speicher dient insbesondere der Rekonstruktion der zweiten Tabelle für den Fall, dass diese verloren geht oder unlesbar wird; diese Fälle sind erheblich seltener als Aktualisierungen des wear-leveled Speichers, so dass die beschrieben Ausführungsform eine schnellere Verwaltung der Sequenznummern ermöglicht. Beim Schreiben von Einträgen in den wear-leveled Speicher können neben Geräteadresse und Sequenznummer weitere Felder geschrieben werden, die weiter unten unter Bezugnahme auf Figur 4 erläutert werden.

In einer Ausführungsform umfasst das Aktualisieren der Sequenznummer in einem Eintrag des zweiten Geräts in dem wear-leveled Speicher: Invalidieren des bisherigen Eintrags des zweiten Geräts in dem wear-leveled Speicher.

Das Invalidieren kann gemäß einem nativen Protokoll des wear-leveled Speichers erfolgen und beispielsweise das Setzen eines Flags oder einer sonstigen Markierung in dem Speicher umfassen. Einträge im wear-leveled Speicher werden im gewöhnlichen Betrieb invalidiert und nicht gelöscht, um die Zugriffszeiten auf diesen Speicher zu reduzieren.

In einer Ausführungsform umfasst das Verfahren ferner Rekonstruieren der zweiten Tabelle aus dem wear-leveled Speicher, falls die zweite Tabelle nicht oder nicht mehr existiert.

Die zweite Tabelle liegt in einem flüchtigen Speicher und geht verloren, wenn der Speicher auch nur kurzzeitig einem Spannungsausfall ausgesetzt ist, beispielsweise weil das Gerät, in dem die Tabelle gespeichert ist, ein mobiles Gerät ist und eine Batterie des Geräts ausfällt, oder weil das Gerät neu gestartet wird. Die hier offenbarten Verfahren erkennen den Verlust der zweiten Tabelle spätestens bei Erhalt einer neuen Nachricht von einem zweiten Gerät und dem Prüfen, ob für das zweite Gerät ein Eintrag in der zweiten Tabelle vorliegt. Alternativ oder zusätzlich kann ein Gerät nach einem Neustart prüfen, ob die zweite Tabelle vorhanden ist. Fehlt die Tabelle, kann sie neu erstellt werden. Hierzu ermittelt das Verfahren zunächst eine maximale Größe für die zweite Tabelle. Beispielsweise kann die Größe oder die Anzahl an Einträgen der ersten Tabelle ermittelt werden und direkt als maximale Größe für die zweite Tabelle verwendet werden. Alternativ kann auf einen von einem Anwender oder Administrator eingestellten Wert zurückgegriffen werden, der vorzugsweise kleiner ist als die Größe der ersten Tabelle. Als weitere Alternative kann das Verfahren die Anzahl der in dem wear-leveled Speicher abgelegten Geräteadressen ermitteln und für die zweite Tabelle eine entsprechende Größe festsetzen; diese Größe ist insbesondere dann sinnvoll, wenn die hier beschriebenen Verfahren bereits häufig ausgeführt wurden und der wear-leveled Speicher somit eine belastbare Angabe zu denjenigen Geräten liefert, die mit dem ersten Gerät bislang kommunizierten. Als weitere Alternative kann die Anzahl unterschiedlicher Geräte ermittelt werden, die laut Erfahrungswerten als Absender in Erscheinung getreten ist, und kann mit geringem Aufschlag, beispielsweise einer Standardabweichung oder einem vorbestimmten Perzentil als Tabellengröße verwendet werden.

Steht die Größe der zweiten Tabelle fest, wird in dem flüchtigen Speicher Speicherplatz im Umfang der ermittelten Größe reserviert/alloziert. In einer Ausführungsform wird ein erster Eintrag der zweiten Tabelle mit dem bereits erläuterten vorbestimmten Bezeichner als Endbezeichner der Tabelle initialisiert, um das aktuelle Ende der zweiten Tabelle zu markieren. Anschließend kopiert das Verfahren Geräteadressen und zugeordnete Sequenznummern aus dem wear-leveled Speicher und legt für jede Geräteadresse und zugeordnete Sequenznummer einen neuen Eintrag in der zweiten Tabelle an. In einer Ausführungsform wird jeder dieser Einträge unter Verschieben aller anderen Einträge in der zweiten Tabelle an dessen Anfang geschrieben. In einer Ausführungsform umfasst der wear-leveled Speicher für jeden Eintrag einen Zeitstempel, der den Zeitpunkt angibt, an dem der Eintrag geschrieben wurde; in dieser Ausführungsform kann das Verfahren die Einträge in der zweiten Tabelle in der Reihenfolge ihrer Zeitstempel speichern, um die oben erläuterte Ordnung nach Alter der Einträge wiederherzustellen. Dabei werden Einträge, die den jüngsten Zeitstempel haben, an den Anfang der zweiten Tabelle und ältere Einträge an die jeweils passende Stelle in der zweiten Tabelle geschrieben und lediglich die nachfolgenden Einträge in der zweiten Tabelle nach hinten verschoben.

In einer Ausführungsform umfasst das Verfahren ferner Initialisieren des ersten Geräts, wobei dem ersten Gerät die erste Tabelle übermittelt wird.

Das Initialisieren kann zu Beginn des Verfahrens ausgeführt werden, bevor die übrigen oben erläuterten Verfahrensschritte ausgeführt werden. Darüber hinaus kann die erste Tabelle später jederzeit an das erste Gerät übermittelt werden: Die erste Tabelle kann durch einen Administrator oder durch einen Server auf Geräten des Netzwerks gespeichert werden, wenn sich die Topologie des Netzwerks ändert. Änderungen an dem Netzwerk umfassen beispielsweise die Aufnahme eines neuen Geräts mit einer neuen Geräteadresse, eine Änderung von Geräteadressen aus anderem Grund oder eine Wegnahme eines Geräts. In einer Ausführungsform wird der Erhalt einer neuen ersten Tabelle zum Anlass genommen, die zweite Tabelle und auch den wear-leveled Speicher neu zu initialisieren beziehungsweise zu invalidieren, da die bisherigen Einträge veraltet sind.

Ausführungsformen der Erfindung umfassen ferner computerlesbare Medien mit darauf gespeicherten Befehlen, die, wenn sie durch einen Prozessor ausgeführt werden, eines der hier offenbarten Ausführungsformen durchführen.

Ausführungsformen der Erfindung umfassen ferner ein System aus Geräten, die in einem Netzwerk miteinander gekoppelt und zur Durchführung der hier offenbarten Verfahren eingerichtet sind. Insbesondere umfassen diese Geräte nichtflüchtigen Speicher zum Speichern einer ersten Tabelle, flüchtigen Speicher zum Speichern einer zweiten Tabelle und wear-leveled Speicher zum Rekonstruieren der zweiten Tabelle, falls diese verloren geht. Die Geräte sind vorzugsweise Mobilgeräte, können jedoch auch drahtgebundene Geräte umfassen.

### KURZE BESCHREIBUNG DER ZEICHNUNGEN

Figur 1 zeigt ein erfindungsgemäßes Gerät.
Figur 2 zeigt ein Verfahren gemäß Ausführungsformen der Erfindung.
Figur 3 zeigt ein weiteres Verfahren gemäß Ausführungsformen der Erfindung.
Figur 4 zeigt Datenstrukturen, die in Ausführungsformen der Erfindung verwendet werden.

### AUSFÜHRLICHE BESCHREIBUNG

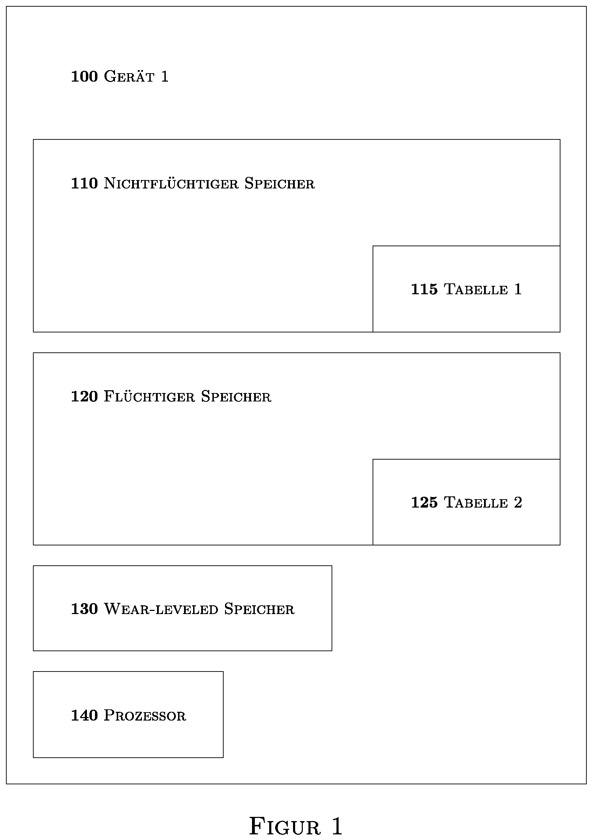

Figur 1 zeigt ein Gerät 100 mit einem nichtflüchtigen Speicher 110, einem flüchtigen Speicher 120, einem wear-leveled Speicher 130 und einem Prozessor 140. Der nichtflüchtige Speicher 110 enthält eine erste Tabelle 115. Der flüchtige Speicher 120 enthält eine zweite Tabelle 125. Das Gerät 100, hier auch als erstes Gerät bezeichnet, ist vorzugsweise ein mobiles Gerät, das in ein Netzwerk eingebunden ist und mit anderen Geräten in dem Netzwerk kommuniziert.

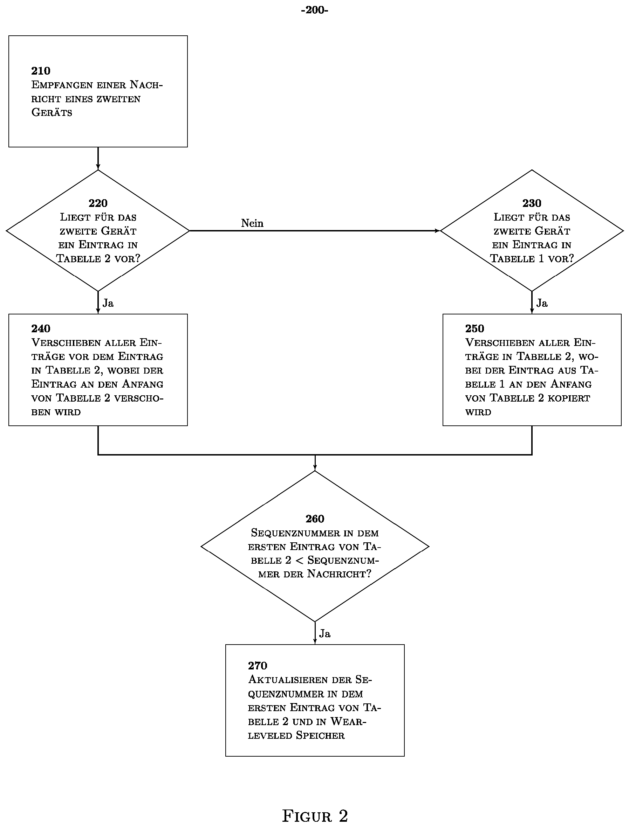

Figur 2 zeigt ein computerimplementiertes Verfahren 200 zur Verwaltung von Sequenznummern in einem Netzwerk. Das Verfahren 200 wird beispielsweise durch das in Figur 1 gezeigte erste Gerät 100 ausgeführt.

In einem Schritt 210 empfängt das erste Gerät eine Nachricht eines zweiten Geräts aus dem Netzwerk. Das zweite Gerät kann mit dem ersten Gerät baugleich sein oder zumindest die in Figur 1 gezeigten Komponenten enthalten. Die Nachricht enthält eine Sequenznummer, die bei korrektem Ablauf, also bei Versenden durch ein autorisiertes Gerät und nicht durch einen unautorisierten Dritten, größer ist als eine zuletzt durch das zweite Gerät versendete Sequenznummer. Gegebenenfalls kann es sich um eine erstmals durch das zweite Gerät versendete Sequenznummer handeln. Die Nachricht kann verschlüsselt sein, und die Sequenznummer kann entweder innerhalb des verschlüsselten Inhalts der Nachricht oder zusätzlich zu dem verschlüsselten Inhalt Bestandteil der Nachricht sein. Im ersten Fall wird die Nachricht spätestens vor der Durchführung von Schritt 260 entschlüsselt, um auf die Sequenznummer der Nachricht zugreifen zu können. Im zweiten Fall kann eine Entschlüsselung gegebenenfalls unterbleiben, wenn sich herausstellt, dass die Sequenznummer der Nachricht ohnehin nicht die geforderten Bedingungen erfüllt. Bei symmetrischer Verschlüsselung wird ein Schlüssel verwendet, der dem Absender zugeordnet ist und der dem ersten Gerät entweder vorab oder auf Anforderung bereitgestellt wurde oder wird.

In Schritt 220 prüft das erste Gerät anhand einer Adresse des zweiten Geräts, ob für dieses Gerät in der zweiten Tabelle, beispielsweise die in Figur 1 gezeigte Tabelle 125, bereits ein Eintrag vorliegt. Dies ist beispielsweise dann der Fall, wenn das erste Gerät bereits früher eine Sequenznummer von dem zweiten Gerät erhielt und diese in die zweite Tabelle schrieb (siehe unten, Schritt 240, 250 oder 270).

Liegt ein solcher Eintrag in der zweiten Tabelle vor, kopiert das Verfahren 200 in Schritt 240 den Eintrag aus dieser Tabelle und verschiebt alle anderen Einträge vor diesem Eintrag um eine Position nach hinten. Der neue Eintrag wird an die erste Position der zweiten Tabelle geschrieben. Auf diese Weise gewährleistet das Verfahren 200, dass Einträge von Geräten, die besonders häufig Nachrichten an das erste Gerät senden, bei nachfolgenden Durchläufen des Verfahrens 200 schnell aufgefunden werden.

Anschließend prüft das Verfahren 200 in Schritt 260, ob die Sequenznummer aus dem nunmehr ersten Eintrag in der zweiten Tabelle kleiner ist als die Sequenznummer in der Nachricht. Alternativ und mit gleicher Wirkung kann geprüft werden, ob die Sequenznummer der Nachricht größer ist als die Sequenznummer in dem ersten Eintrag. Ist dies der Fall, aktualisiert das Verfahren 200 in Schritt 270 die Sequenznummer in dem ersten Eintrag der zweiten Tabelle und außerdem in einem wear-leveled Speicher des Geräts, beispielsweise dem in Figur 1 gezeigten wear-leveled Speicher 130; im letzteren Fall wird hierzu ein etwaiger bisheriger Eintrag im wear-leveled Speicher invalidiert und ein neuer Eintrag an eine neue Speicherstelle geschrieben. Verläuft die Prüfung in Schritt 260 hingegen negativ, verzichtet das Verfahren 200 auf Aktualisierungen; die Nachricht wird verworfen und/oder ein Bericht an einen Administrator oder Anwender gesendet, um auf die fehlerhafte Sequenznummer und die Möglichkeit eines unzulässigen Zugriffsversuchs hinzuweisen.

Wurde in Schritt 220 für das zweite Gerät kein Eintrag in der zweiten Tabelle gefunden, wird die Prüfung auf einen Eintrag des Geräts stattdessen in Schritt 230 auf der ersten Tabelle ausgeführt, beispielsweise der in Figur 1 gezeigten Tabelle 115. Findet das Verfahren 200 auch in dieser Tabelle keinen Eintrag für das Gerät, ist dieses offenbar unbekannt oder nicht teil des Netzwerks. Die Nachricht wird in diesem Fall verworfen und/oder ein Bericht an einen Administrator oder Anwender, gegebenenfalls auch an das zweite Gerät, gesendet. Wird ein solcher Eintrag hingegen gefunden, fügt das Verfahren 200 den Eintrag aus der ersten Tabelle an der ersten Position der zweiten Tabelle ein, wobei alle anderen Einträge der zweiten Tabelle um eine Position nach hinten verschoben werden. Anschließend fährt das Verfahren 200 bei Schritt 260 fort, der bereits beschrieben wurde.

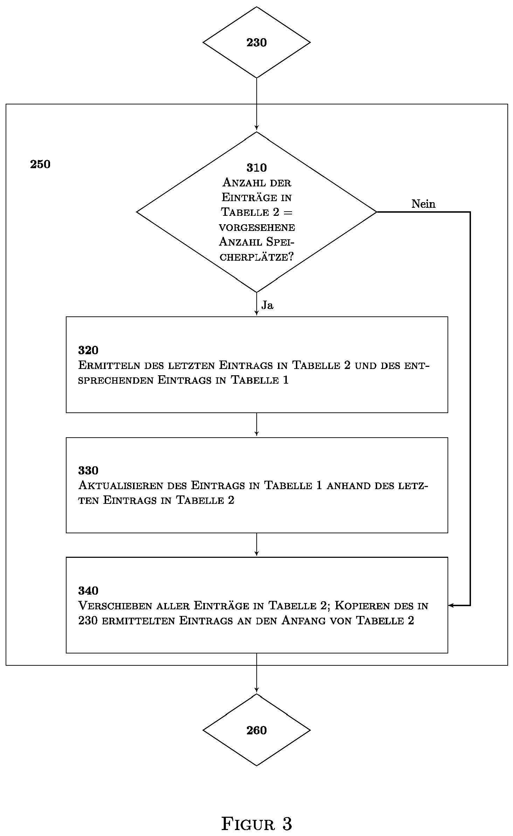

Figur 3 zeigt eine mögliche Erweiterung des Verfahrens 200. Wird in Verfahren 200 Schritt 250, also das Kopieren eines Eintrags aus der ersten Tabelle an den Anfang der zweiten Tabelle, durchgeführt, so vergrößert sich diese um einen Eintrag. Die Größe der zweiten Tabelle ist jedoch in bestimmten Ausführungsformen auf eine maximale Anzahl von Einträgen beschränkt. Ist die maximale Anzahl dieser Einträge kleiner als die Anzahl von Einträgen in der ersten Tabelle, so liefert die in Figur 3 gezeigte Erweiterung einen möglichen Ansatz, um einen Überlauf der zweiten Tabelle zu vermeiden.

Der bereits in Bezug auf Figur 2 erläuterte Schritt 250 ist in Figur 3 mit möglichen Teilschritten 310 bis 340 gezeigt. In Schritt 310 wird geprüft, ob die Anzahl der Einträge in der zweiten Tabelle bereits die maximale Anzahl an Einträgen erreicht hat. Diese Prüfung kann etwa durch Zählen aller Einträge der zweiten Tabelle bis zu einem Endbezeichner erfolgen. Wurde die maximale Anzahl an Einträgen bereits erreicht, so ermittelt Schritt 320 den letzten Eintrag in der zweiten Tabelle und schlägt diesen in der ersten Tabelle nach, indem es die Geräteadresse des Eintrags in der ersten Tabelle nachschlägt. Der Eintrag in der ersten Tabelle wird anhand des letzten Eintrags der zweiten Tabelle in Schritt 330 aktualisiert, insbesondere wird die Sequenznummer in die erste Tabelle kopiert.

Anschließend werden in Schritt 340 sämtliche Einträge in der zweiten Tabelle um eine Position nach hinten verschoben, wobei der letzte Eintrag in der zweiten Tabelle gelöscht wird; der Endbezeichner der zweiten Tabelle verbleibt an der gleichen Position. Zudem wird der in Schritt 230 des Verfahrens 200 ermittelte Eintrag aus der ersten Tabelle, nämlich dem in Schritt 260 noch hinsichtlich seiner Sequenznummer zu prüfenden Eintrag, an die Anfangsposition der zweiten Tabelle kopiert.

Figur 4 zeigt eine mögliche Ausgestaltung der in den hier offenbarten Ausführungsformen verwendeten Datenstrukturen.

Tabelle 115 ist eine in einem nichtflüchtigen Speicher eines Geräts gespeicherte Struktur, die hier n Einträge umfasst. Jeder Eintrag enthält eine Geräteadresse 410 und eine dem betreffenden Gerät zugeordnete Sequenznummer 415. Die Tabelle 115 kann im Rahmen einer Initialisierung an ein Gerät in einem Netzwerk bereitgestellt werden. Die Sequenznummern der Geräte in der Tabelle 115 dienen als aktuelle Sequenznummern und können gemäß den hier offenbarten Verfahren nach und nach in einer zweiten Tabelle aktualisiert werden.

Tabelle 125 ist in einem flüchtigen Speicher des Geräts gespeichert und umfasst Geräteadressen 420 sowie den Geräteadressen 420 zugeordnete Sequenznummern 425, Positionen in der ersten Tabelle und Adressen in einem wear-leveled Speicher. Die Tabelle 125 enthält hier m Einträge. Die Geräteadressen 420 sind beispielsweise IP-Adressen oder Bezeichner der Geräte, unter denen die Geräte in dem Netzwerk erreichbar sind. Die Adressen können auch ein lokales Format umfassen, beispielsweise "1.4.100", "1.4.200". Die Sequenznummern 425 sind aktuelle Sequenznummern der Geräte; sie werden durch die hier offenbarten Verfahren anhand von Nachrichten, die an dem Gerät empfangen werden, aktualisiert. Beispiele für Sequenznummern sind "1", "625416", "345679". Die Positionen 417 beziehen sich auf eine Position (Index) in der ersten Tabelle und zeigen einen dort gespeicherten Eintrag für das gleiche Gerät an, das durch die entsprechende Geräteadresse 420 identifiziert wird; die Positionen können Verwendung finden, wenn, wie in Figur 3 gezeigt, die zweite Tabelle ihre maximale Größe erreicht hat; in diesem Fall kann in Schritt 320 der Figur 3 aus dem letzten Eintrag der zweiten Tabelle die Position in der ersten Tabelle ausgelesen und der entsprechende Eintrag der ersten Tabelle direkt ermittelt und aktualisiert (Schritt 330) werden. Beispiele für Positionen sind "17", "14". Die Adressen 419 im wear-leveled Speicher können in Schritt 270 des Verfahrens 200 verwendet werden: Wird eine Sequenznummer eines Geräts in dem wear-leveled Speicher aktualisiert, so erfolgt dies unter Verwendung eines noch nicht beschriebenen Speicherbereichs dieses Speichers; existiert für das Gerät in dem wear-leveled Speicher eine bisherige Sequenznummer, so wird diese invalidiert - die hierzu erforderliche Adresse wird aus der Adresse 419 der zweiten Tabelle 125 gelesen. Nachdem die neue Sequenznummer in den wear-leveled Speicher geschrieben wurde, vermerkt das Verfahren 200 die Adresse dieser Sequenznummer in dem wear-leveled Speicher als neue Adresse 419 in der zweiten Tabelle 125. Beispiele für die Adressen sind "0x90001708", "0x9000160A" (Hexadezimalformat). Leere Einträge können das folgende Tupel umfassen: "0.0.0; 0; 0; oxFFFFFFFF".

Wear-leveled Speicher 130 umfasst eine Magic Number 131, Geräteadresse 132, Sequenznummer 133, Position 134 in der ersten Tabelle und CRC 135. Diese Felder umfassen gemeinsam einen Eintrag, und der wear-leveled Speicher 130 kann mehrere solcher Einträge umfassen. Allerdings sind diese nicht in Tabellenform gespeichert, sondern in Speicherbereichen (Sektoren) des Speichers 130, die nicht notwendigerweise direkt aufeinanderfolgen. Außerdem können die Einträge invalidiert sein, so dass sich eine unregelmäßige Speicherstruktur ergibt.

Die Magic Number 131 dient der Erkennung, dass an dieser Stelle in dem wear-leveled Speicher 130 ein Eintrag beginnt. Da die Einträge nicht in Tabellenform oder anderer Gesamtform gespeichert sind, dient die Magic Number 131 somit der Unterscheidung von anderweitigen gespeicherten Daten.

Die Geräteadresse 132 umfasst das gleiche Format wie die bereit beschriebenen Geräteadressen 410 und 420. Die Sequenznummern 133 weisen die gleichen Eigenschaften wie die Sequenznummern 415 und 425 auf. Die Position 134 in der ersten Tabelle entspricht einer Position oder einem Index, an dem ein entsprechender Eintrag für das betreffende Gerät in der ersten Tabelle gespeichert ist. Der CRC 135 ist ein Feld zur Angabe eines Prüfcodes für den Eintrag, um diesen bei Bedarf oder auch bei jedem Einlesen auf seine Integrität prüfen zu können.

Die in den Einträgen des wear-leveled Speichers abgelegten Einträge spiegeln die entsprechenden Daten der zweiten Tabelle und dienen der Rekonstruktion der zweiten Tabelle, wenn diese verloren geht. Bei einer solchen Rekonstruktion können sämtliche Felder der zweiten Tabelle, also Geräteadressen 420, Sequenznummern 425, Positionen 417 in der ersten Tabelle sowie Adressen 419 in wear-leveled Speicher wiederhergestellt werden.

Die Erfindung eignet sich insbesondere für lokale Netzwerke in der Gebäudeautomatisierung (Smart Home), beispielsweise in Kombination mit dem bekannten KNX-Standard. Diese Netzwerke kommunizieren in der Regel per Funk und/oder Twisted-Pair und verfügen zumeist über ein eigenes Adressierungsformat. Die hier als erste Tabelle eingeführte Datenstruktur kann durch einen solchen Standard bereits vorgegeben sein und mittels einschlägiger Anwendungen, beispielsweise der PC-Software "ETS" zusammengestellt oder konfiguriert werden. In derartigen Umgebungen umfasst die erste Tabelle üblicherweise eine sehr hohe Anzahl von Geräten in einem oder mehreren Gebäuden, von denen aus Sicht eines einzelnen Geräts jedoch nur eine sehr kleine Teilmenge Nachrichten an dieses Gerät versendet oder von diesem empfängt. Die Erfindung beschleunigt die Kommunikation der Geräte in solchen Umgebungen sehr stark, da die zweite Tabelle in einem einzelnen Gerät erfindungsgemäß nur eine sehr kleine Anzahl an Geräten umfasst. Zugriffe auf einzelne Einträge in der zweiten Tabelle erfolgen somit sehr schnell, und der Speicherbedarf der zweiten Tabelle im flüchtigen Speicher ist sehr gering.

## Patentansprüche

1. Computerimplementiertes Verfahren zur Verwaltung von Sequenznummern in einem Netzwerk, umfassend:
Empfangen, durch ein erstes Gerät in dem Netzwerk, einer Nachricht eines zweiten Geräts des Netzwerks, wobei das erste Gerät eine erste Tabelle in einem nichtflüchtigen Speicher und eine zweite Tabelle in einem flüchtigen Speicher unterhält;
Prüfen, durch das erste Gerät, ob für das zweite Gerät ein Eintrag in der zweiten Tabelle vorliegt,
**dadurch gekennzeichnet, dass** es umfasst:
falls für das zweite Gerät ein Eintrag vorliegt, Verschieben aller Einträge der zweiten Tabelle vor diesem Eintrag um eine Position nach hinten, und Verschieben des Eintrags an den Beginn der zweiten Tabelle;
falls für das zweite Gerät kein Eintrag in der zweiten Tabelle vorliegt, Prüfen, ob für das zweite Gerät ein Eintrag in der ersten Tabelle vorliegt, und, falls ein Eintrag in der ersten Tabelle vorliegt, Einfügen des Eintrags der ersten Tabelle zu Beginn der zweiten Tabelle, und Verschieben aller anderen Einträge der zweiten Tabelle um eine Position nach hinten;
Vergleichen, durch das erste Gerät, der Sequenznummer der Nachricht mit einer Sequenznummer in dem ersten Eintrag der zweiten Tabelle; und
falls die Sequenznummer in dem ersten Eintrag kleiner ist als die Sequenznummer der Nachricht, Aktualisieren der Sequenznummer in dem ersten Eintrag der zweiten Tabelle und in einem Eintrag des zweiten Geräts in einem wear-leveled Speicher.

2. Verfahren nach Anspruch 1, ferner umfassend:
Verarbeiten der Nachricht, falls die Sequenznummer in dem ersten Eintrag kleiner ist als die Sequenznummer der Nachricht.

3. Verfahren nach Anspruch 1 oder 2, wobei jeder Eintrag der zweiten Tabelle eine Speicheradresse oder einen Index eines Eintrags für das gleiche sendende Gerät in der ersten Tabelle und/oder eine Speicheradresse eines Eintrags für das gleiche sendende Gerät in dem wear-leveled Speicher enthält.

4. Verfahren nach einem der vorstehenden Ansprüche, wobei das Verschieben aller anderen Einträge der zweiten Tabelle umfasst:
Prüfen, ob die Anzahl der Einträge die Anzahl der Speicherplätze in der zweiten Tabelle übersteigt, und
falls die Anzahl der Einträge die Anzahl der Speicherplätze übersteigt, Ermitteln eines Eintrags in der ersten Tabelle, wobei der Eintrag in der ersten Tabelle das gleiche Gerät umfasst wie der überzählige Eintrag der zweiten Tabelle, und Aktualisieren des Eintrags in der ersten Tabelle.

5. Verfahren nach Anspruch 4, wobei das Prüfen, ob die Anzahl der Einträge die Anzahl der Speicherplätze in der zweiten Tabelle übersteigt, umfasst:
Zählen der Einträge der zweiten Tabelle, bis ein Eintrag erreicht ist, der einen vorbestimmten Bezeichner enthält, und Vergleichen der Zahl mit einer vorgesehenen maximalen Größe der Tabelle.

6. Verfahren nach Anspruch 4 oder 5, wobei der nichtflüchtige Speicher ein nichtflüchtiger Flashspeicher ist, und wobei das Aktualisieren des Eintrags in der ersten Tabelle umfasst:
Auslesen eines Sektors des nichtflüchtigen Speichers, der den Eintrag enthält, und Löschen des Sektors;
Ersetzen des Eintrags in dem ausgelesenen Sektor durch den überzähligen Eintrag der zweiten Tabelle; und
Schreiben des ausgelesenen Sektors in den gelöschten Sektor.

7. Verfahren nach einem der vorstehenden Ansprüche, wobei das Prüfen, ob für das zweite Gerät ein Eintrag in der zweiten Tabelle vorliegt, umfasst:
Auslesen einer Geräteadresse aus der Nachricht; und
Vergleichen jedes Eintrags in der zweiten Tabelle, bis ein Eintrag gefunden wurde, der die Geräteadresse enthält.

8. Verfahren nach einem der vorstehenden Ansprüche, wobei Einträge in der ersten Tabelle nach Geräteadressen sortiert sind, und wobei Prüfen, ob für das zweite Gerät ein Eintrag in der ersten Tabelle vorliegt, umfasst, eine binäre Suche auf den Einträgen der ersten Tabelle anhand deren Geräteadressen durchzuführen.

9. Verfahren nach einem der vorstehenden Ansprüche, wobei die Nachricht nicht weiter verarbeitet wird, wenn beim Prüfen, ob für das zweite Gerät ein Eintrag in der ersten Tabelle vorliegt, in der ersten Tabelle kein Eintrag gefunden wurde.

10. Verfahren nach einem der vorstehenden Ansprüche, wobei die Nachricht nicht weiter verarbeitet wird, wenn die Sequenznummer in dem ersten Eintrag der zweiten Tabelle größer oder gleich der Sequenznummer der Nachricht ist.

11. Verfahren nach einem der vorstehenden Ansprüche, wobei der wear-leveled Speicher vorab gelöschte Sektoren enthält, und wobei das Aktualisieren der Sequenznummer in einem Eintrag des zweiten Geräts in dem wear-leveled Speicher umfasst:
Auswählen einer unbeschriebenen Stelle in einem zuvor gelöschten Sektor und Schreiben eines Eintrags mit der Sequenznummer in den ausgewählten Sektor.

12. Verfahren nach einem der vorstehenden Ansprüche, wobei das Aktualisieren der Sequenznummer in einem Eintrag des zweiten Geräts in dem wear-leveled Speicher umfasst:
Invalidieren des bisherigen Eintrags des zweiten Geräts in dem wear-leveled Speicher.

13. Verfahren nach einem der vorstehenden Ansprüche, ferner umfassend:
Rekonstruieren der zweiten Tabelle aus dem wear-leveled Speicher, falls die zweite Tabelle nicht oder nicht mehr existiert.

14. Verfahren nach einem der vorstehenden Ansprüche, ferner umfassend:
Initialisieren des ersten Geräts, wobei dem ersten Gerät die erste Tabelle übermittelt wird.

15. Computerlesbares Medium mit darauf gespeicherten Befehlen, die, wenn sie durch einen Prozessor ausgeführt werden, das Verfahren nach einem der vorstehenden Ansprüche durchführen.

## Claims

1. A computer-implemented method for managing sequence numbers in a network, comprising:
receiving, by a first device in the network, a message of a second device of the network, wherein the first device maintains a first table in a non-volatile memory and a second table in a volatile memory;
checking, by the first device, whether there is an entry in the second table for the second device;
**characterized by** comprising:
if there is an entry for the second device, moving all entries of the second table before that entry backward by one position, and moving the entry to the beginning of the second table;
if there is no entry in the second table for the second device, checking whether there is an entry in the first table for the second device, and if there is an entry in the first table, inserting the entry of the first table at the beginning of the second table, and moving all other entries of the second table backward by one position;
comparing, by the first device, the sequence number of the message with a sequence number in the first entry of the second table; and
if the sequence number in the first entry is less than the sequence number of the message, updating the sequence number in the first entry of the second table and in an entry of the second device in a wear-leveled memory.

2. The method of claim 1, further comprising:
processing the message if the sequence number in the first entry is less than the sequence number of the message.

3. The method of claim 1 or 2, wherein each entry of the second table includes at least one of a memory address or an index of an entry for the same sending device in the first table and a memory address of an entry for the same sending device in the wear-leveled memory.

4. The method of any preceding claim, wherein moving all other entries of the second table comprises:
checking whether the number of entries exceeds the number of memory spaces in the second table, and
if the number of entries exceeds the number of memory spaces, determining an entry in the first table, wherein the entry in the first table comprises the same device as the surplus entry of the second table, and updating the entry in the first table.

5. The method of claim 4, wherein checking whether the number of entries exceeds the number of memory spaces in the second table comprises:
counting the entries of the second table until an entry is reached that includes a predetermined identifier, and comparing the number to an intended maximum size of the table.

6. The method of claim 4 or 5, wherein the non-volatile memory is a non-volatile flash memory, and wherein updating the entry in the first table comprises:
reading a sector of the non-volatile memory that includes the entry, and deleting the sector;
replacing the entry in the read sector with the surplus entry of the second table; and
writing the read sector to the deleted sector.

7. The method of any preceding claim, wherein checking whether there is an entry in the second table for the second device comprises:
reading a device address from the message; and
comparing each entry in the second table until an entry is found that includes the device address.

8. The method of any preceding claim, wherein entries in the first table are sorted by device addresses, and wherein checking whether there is an entry in the first table for the second device comprises performing a binary search on the entries of the first table based on their device addresses.

9. The method of any preceding claim, wherein the message is not further processed if no entry is found in the first table when checking whether there is an entry in the first table for the second device.

10. The method of any preceding claim, wherein the message is not further processed if the sequence number in the first entry of the second table is greater than or equal to the sequence number of the message.

11. The method of any preceding claim, wherein the wear-leveled memory includes pre-deleted sectors, and wherein updating the sequence number in an entry of the second device in the wear-leveled memory comprises:
selecting an unwritten location in a previously deleted sector, and writing an entry having the sequence number to the selected sector.

12. The method of any preceding claim, wherein updating the sequence number in an entry of the second device in the wear-leveled memory comprises:
invalidating the previous entry of the second device in the wear-leveled memory.

13. The method of any preceding claim, the method further comprising:
reconstructing the second table from the wear-leveled memory, if the second table does not exist or does not exist anymore.

14. The method of any preceding claim, the method further comprising:
initializing the first device, wherein the first table is transmitted to the first device.

15. A computer-readable medium comprising instructions which, when executed by a processor, carry out the method according to any preceding claim.

## Revendications

1. Procédé mis en œuvre par ordinateur pour la gestion des numéros de séquence dans un réseau, omvattend :
Recevoir, par un premier dispositif dans le réseau, un message d'un deuxième dispositif du réseau, le premier dispositif maintenant une première table dans une mémoire non volatile et une deuxième table dans une mémoire volatile ;
Vérifier, par le premier dispositif, si une entrée pour le deuxième dispositif existe dans la deuxième table,
**caractérisé en ce qu'**il omvattend :
si une entrée existe pour le deuxième dispositif, déplacer toutes les entrées de la deuxième table avant cette entrée d'un emplacement vers l'arrière, et déplacer l'entrée au début de la deuxième table ;
si aucune entrée pour le deuxième dispositif n'existe dans la deuxième table, vérifier si une entrée pour le deuxième dispositif existe dans la première table, et, si une entrée existe dans la première table, insérer l'entrée de la première table au début de la deuxième table, et déplacer toutes les autres entrées de la deuxième table d'un emplacement vers l'arrière ;
Comparer, par le premier dispositif, le numéro de séquence du message avec un numéro de séquence dans la première entrée de la deuxième table ; et
si le numéro de séquence dans la première entrée est inférieur au numéro de séquence du message, mettre à jour le numéro de séquence dans la première entrée de la deuxième table et dans une entrée du deuxième dispositif dans une mémoire à usure répartie.

2. Procédé selon la revendication 1, omvattend en outre :
Traiter le message, si le numéro de séquence dans la première entrée est inférieur au numéro de séquence du message.

3. Procédé selon la revendication 1 ou 2, chaque entrée de la deuxième table contenant une adresse mémoire ou un index d'une entrée pour le même dispositif émetteur dans la première table et/ou une adresse mémoire d'une entrée pour le même dispositif émetteur dans la mémoire à usure répartie.

4. Procédé selon l'une des revendications précédentes, le déplacement de toutes les autres entrées de la deuxième table omvattend :
Vérifier si le nombre d'entrées dépasse le nombre d'emplacements mémoire dans la deuxième table, et
si le nombre d'entrées dépasse le nombre d'emplacements mémoire, identifier une entrée dans la première table, l'entrée dans la première table omvattend le même dispositif que l'entrée excédentaire de la deuxième table, et mettre à jour l'entrée dans la première table.

5. Procédé selon la revendication 4, la vérification si le nombre d'entrées dépasse le nombre d'emplacements mémoire dans la deuxième table omvattend :
Compter les entrées de la deuxième table jusqu'à ce qu'une entrée soit atteinte qui omvattend un identifiant prédéterminé, et comparer le nombre avec une taille maximale prévue de la table.

6. Procédé selon la revendication 4 ou 5, la mémoire non volatile étant une mémoire flash non volatile, et la mise à jour de l'entrée dans la première table omvattend :
Lire un secteur de la mémoire non volatile qui omvattend l'entrée, et effacer le secteur ;
Remplacer l'entrée dans le secteur lu par l'entrée excédentaire de la deuxième table ; et Écrire le secteur lu dans le secteur effacé.

7. Procédé selon l'une des revendications précédentes, la vérification si une entrée pour le deuxième dispositif existe dans la deuxième table omvattend :
Lire une adresse de dispositif à partir du message ; et
Comparer chaque entrée de la deuxième table jusqu'à ce qu'une entrée soit trouvée qui omvattend l'adresse de dispositif.

8. Procédé selon l'une des revendications précédentes, les entrées de la première table étant triées selon les adresses de dispositif, et la vérification si une entrée pour le deuxième dispositif existe dans la première table omvattend réaliser une recherche binaire sur les entrées de la première table en fonction de leurs adresses de dispositif.

9. Procédé selon l'une des revendications précédentes, le message n'étant pas traité davantage si, lors de la vérification si une entrée pour le deuxième dispositif existe dans la première table, aucune entrée n'a été trouvée dans la première table.

10. Procédé selon l'une des revendications précédentes, le message n'étant pas traité davantage si le numéro de séquence dans la première entrée de la deuxième table est supérieur ou égal au numéro de séquence du message.

11. Procédé selon l'une des revendications précédentes, la mémoire à usure répartie omvattend des secteurs préalablement effacés, et la mise à jour du numéro de séquence dans une entrée du deuxième dispositif dans la mémoire à usure répartie omvattend :
Sélectionner un emplacement non écrit dans un secteur préalablement effacé et écrire une entrée avec le numéro de séquence dans le secteur sélectionné.

12. Procédé selon l'une des revendications précédentes, la mise à jour du numéro de séquence dans une entrée du deuxième dispositif dans la mémoire à usure répartie omvattend :
Invalider l'entrée précédente du deuxième dispositif dans la mémoire à usure répartie.

13. Procédé selon l'une des revendications précédentes, omvattend en outre :
Reconstituer la deuxième table à partir de la mémoire à usure répartie, si la deuxième table n'existe pas ou n'existe plus.

14. Procédé selon l'une des revendications précédentes, omvattend en outre :
Initialiser le premier dispositif, la première table étant transmise au premier dispositif.

15. Support lisible par ordinateur sur lequel sont stockées des instructions qui, lorsqu'elles sont exécutées par un processeur, réalisent le procédé selon l'une des revendications précédentes.
